(19) Europäisches Patentamt
European Patent Office
Office européen des brevets

(11) **EP 2 193 047 B1**

(12) **FASCICULE DE BREVET EUROPEEN**

(45) Date de publication et mention
de la délivrance du brevet:
**07.08.2013 Bulletin 2013/32**

(21) Numéro de dépôt: **08839664.3**

(22) Date de dépôt: **29.09.2008**

(51) Int Cl.:
*B60R 1/00* *(2006.01)*      *G06T 3/00* *(2006.01)*
*H04N 5/262* *(2006.01)*      *H04N 7/18* *(2006.01)*
*B60R 11/04* *(2006.01)*

(86) Numéro de dépôt international:
**PCT/FR2008/051744**

(87) Numéro de publication internationale:
**WO 2009/050399 (23.04.2009 Gazette 2009/17)**

(54) **DISPOSITIF D'AIDE A LA SORTIE DE VOIE OCCULTEE**

UNTERSTÜTZUNGSVORRICHTUNG ZUR AUSFAHRT AUS EINER VERSTECKTEN STRASSE

ASSISTANCE DEVICE FOR EXITING A HIDDEN LANE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **28.09.2007 FR 0757933**

(43) Date de publication de la demande:
**09.06.2010 Bulletin 2010/23**

(73) Titulaire: **Renault S.A.S.**
**92100 Boulogne-Billancourt (FR)**

(72) Inventeur: **PAURD, Florent**
**F-75014 Paris (FR)**

(56) Documents cités:
**EP-A- 1 356 988**      **EP-A- 1 777 107**
**DE-A1- 10 127 204**      **DE-A1-102005 046 671**
**US-A1- 2003 021 490**      **US-A1- 2004 212 676**

**EP 2 193 047 B1**

**Description**

La présente invention concerne un dispositif d'aide à la sortie de voie occultée, notamment destiné à être utilisé dans un véhicule automobile du type comprenant des moyens de vision latéraux prenant place sur une partie située vers une extrémité du véhicule aptes à capturer des images latérales d'au moins un côté du véhicule, et un système électronique d'affichage apte à recevoir des signaux représentatif des images capturées, et un écran de visualisation apte à transformer les signaux de sortie du système électronique d'affichage pour les retransmettre à un utilisateur sous forme d'images.

En conduite urbaine, un conducteur doit parfois engager au moins une partie de son véhicule dans un environnement pour lequel il ne sait pas s'il est dégagé, ce qui peut se révéler être une manoeuvre dangereuse.

C'est le cas notamment lorsqu'un conducteur sort d'une voie étroite ou d'une sortie de parc de stationnement pour déboucher dans une rue passante, le conducteur devant engager au moins une partie de son véhicule avant de pouvoir apercevoir d'éventuels véhicules ou piétons arrivant sur des voies sensiblement perpendiculaires à la voie de sortie.

Les dispositifs proposés dans les documents de brevet JP2007015662 et JP10301167 intègrent une caméra implantée dans la face avant du véhicule associée à un prisme pour recueillir une image de chaque côté du véhicule. Cependant, pour fonctionner ces dispositifs font saillie à l'avant du véhicule, impactant négativement le design de la calandre du véhicule et étant de plus très sensibles aux chocs même légers reçus par le véhicule, notamment lors de stationnement en créneau avec un véhicule situé à l'avant.

D'autres systèmes comme celui décrit dans le document de brevet D19929575 présentent des dispositifs de vision latérale implantés sur les rétroviseurs du véhicule. Cette implantation n'est pas satisfaisante car le véhicule doit toujours être avancé d'au moins la longueur de son capot, n'augmentant alors pas sensiblement le champ de vision du conducteur.

De plus, ces dispositifs doivent permettre à l'utilisateur de visualiser les images de façon claire et non trompeuse, de sorte que l'utilisateur puisse apprécier les distances et les directions des véhicules ou personnes surtout sur les côtés latéraux.

Un dispositif selon le préambule de la revendication 1 est connu du EP-A-1777107.

La présente invention a pour but de fournir une dispositif d'aide à la sortie de voie occultée amélioré, et notamment un dispositif qui permet de surmonter les inconvénients de l'art antérieur précédemment cité.

Avec cet objectif en vue, le dispositif d'aide à la sortie de voie occultée est défini par la revendication 1.

Selon d'autres caractéristiques avantageuses de l'invention qui peuvent prises séparément ou en combinaison :

- les moyens de transformation en perspective utilisent une table de correspondance prédéterminée par mise au point et intégrée dans un mémoire pour transformer les images tronquées ;
- les moyens de vision latéraux sont aptes à capturer des images latérales avant gauche et avant droite du véhicule ;
- les moyens d'adaptation d'images sont aptes à traiter des images latérales avant gauche et avant droite en vue d'un affichage simultané des images latérales ;
- le système électronique d'affichage comporte des moyens de combinaison desdites images avant gauche et droite adaptées de sorte que ces images adaptées soient affichées en combinaison dans l'écran de visualisation ;
- la projection des champs d'intérêts dans un repère orthonormé $(\alpha, F, \beta)$ d'un plan horizontal sont délimités dans un plan image I situé à une distance focale fx du foyer F des moyens de vision latéraux et coupant l'axe optique des moyens de vision latéraux, orienté d'un angle $\theta$cam par rapport à l'axe $\beta$, en un point X0 par un bord avant Xav tel que :

$$X_{av} = X_0 - f_x * \sin(\theta_{av})$$

avec $\theta$av tel que

$$\theta_{av} = A\tan(\alpha_{conducteur} - \beta_{conducteur}) - \theta_{cam}$$

où $\alpha_{conducteur}$ et $\beta_{conducteur}$ sont les coordonnées du point Pconducteur auquel un conducteur peut prendre place et par un bord arrière Xarr tel que :

$$X_{arr} = X_0 - f_x * \sin(\theta_{arr})$$

avec θarr tel que

$$\theta_{arr} = A\tan(D - \Delta L) + \theta_{cam}$$

où D et ΔL sont les distances séparant les moyens de vision latéraux par rapport à une arête occultante A respectivement suivant les axes α et β;

- les images latérales sont capturées à une fréquence variable en fonction de la vitesse des obstacles mobiles à détecter ;
- les moyens d'adaptation d'images réalisent des opérations d'adaptation d'images différentes pour les images avant gauche et avant droite ;
- les moyens de vision latéraux sont disposés dans des boîtiers d'éclairage ou de signalisation du véhicule, de préférence derrière une paroi transparente de protection des boîtiers d'éclairage ou à proximité immédiate des répéteurs de clignotants situés sur les ailes avant du véhicule ;
- l'écran de visualisation est celui d'un système de navigation ;
- les moyens de vision latéraux comportent des moyens de correction des images capturées aptes à corriger la distorsion et/ou des niveaux de contrastes.

D'autres caractéristiques et avantages de la présente invention apparaîtront plus clairement à la lecture de la description suivante donnée à titre d'exemple illustratif et non limitatif et faite en référence aux figures suivantes :

- la figure 1 représente un véhicule automobile débouchant d'une voie de circulation étroite pour emprunter une voie perpendiculaire sur laquelle circule du trafic automobile ;
- la figure 2 représente le principe de fonctionnement du dispositif selon l'invention ;
- la figure 3 représente la construction géométrique de détermination de la zone d'intérêt en présence d'un obstacle occultant situé à droite du véhicule ;
- la figure 4 représente la détermination des bords de la zone d'intérêt dans un plan image de la caméra pour une obstacle occultant se situant à droite du véhicule ;
- la figure 5 représente la transposition de la zone d'intérêt géométrique d'une image latérale gauche en une image compréhensible à l'utilisateur ;
- la figure 6 représentant un exemple d'affichage d'images latérales gauche et droite dans un écran de visualisation.

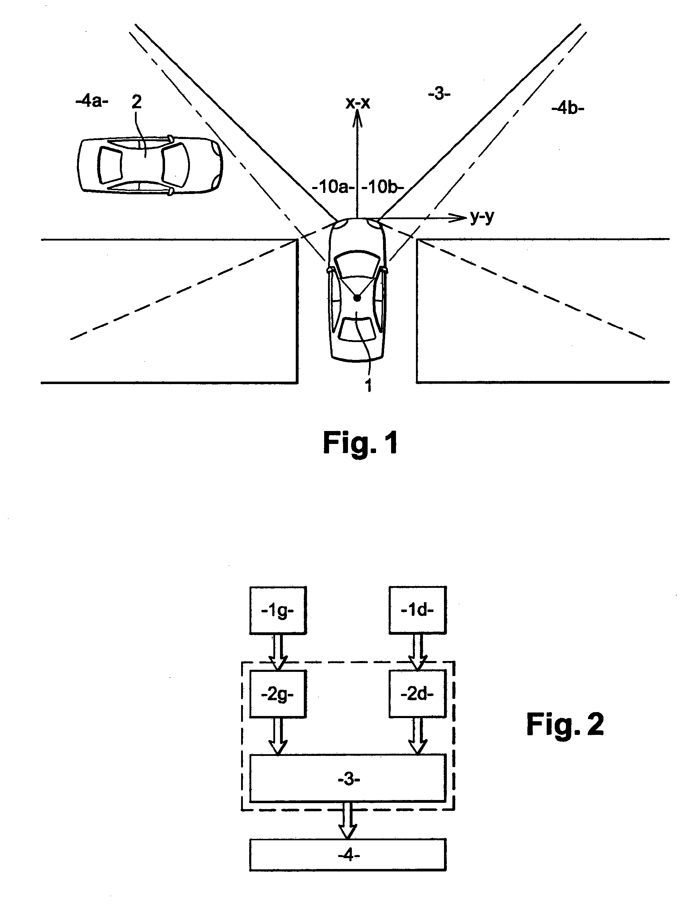

En référence à la figure 1, un véhicule automobile 1 débouche d'une voie de circulation étroite pour emprunter une voie perpendiculaire sur laquelle circulent des véhicules étrangers 2.

Il est entendu que l'« avant » est la direction normale de déplacement du véhicule et la direction « arrière » est la direction opposée.

A l'avant de ce véhicule automobile 1 sont indiqués les axes X-X et Y-Y, l'axe X-X représentant l'axe longitudinal du véhicule 1 et l'axe Y-Y représentant l'axe transversal.

Le véhicule automobile 1 est pourvu de moyens de vision latéraux à gauche 10a, et à droite 10b. Ces moyens de vision 10a, 10b du véhicule 1 peuvent être une caméra vidéo, ou des capteurs CMOS ou CCD.

Ces moyens de vision 10a, 10b sont de préférence situés sur une partie du véhicule 1 située en avant du conducteur et plus généralement en avant du poste de conduite, c'est-à-dire en avant du montant inférieur du pare-brise, notamment sur une partie des ailes du véhicule 1 la moins exposée aux chocs et n'obstruant pas le champ de vision du conducteur 3.

Lesdits moyens de vision 10a, 10b peuvent être disposés dans les boîtiers d'éclairage ou de signalisation du véhicule 1, de préférence sur les bords extérieurs des blocs optiques derrière leur paroi transparente de protection de manière à profiter de l'étanchéité des boîtiers. Cette disposition particulière permet de limiter l'exposition de ces moyens aux chocs frontaux fréquents lors de manoeuvres de stationnement, et permet une protection contre les intempéries et les infiltrations d'eau.

Lesdits moyens de vision 10a, 10b peuvent être placés dans, ou juste à côté des répéteurs de clignotants situés sur les ailes avant du véhicule 1.

Sur la figure 1 sont également représentés les champs de vision 3 du conducteur lorsqu'il se situe à sa position de conduite dans l'habitacle et les champs de vision latéraux 4a, 4b apportés par les moyens de vision latéraux 10a, 10b. On voit donc clairement que le véhicule se trouve dans l'un des champs de vision latéraux 4a, 4b alors qu'il ne se situe pas encore dans le champs de vision 3 du conducteur tandis que le véhicule étranger 2 n'est situé qu'à quelques mètres du véhicule 1.

Les champs de vision latéraux 4a, 4b formés des images obtenues par les moyens de vision latéraux 10a et 10b sont traitées par un système électronique d'affichage et retransmises au conducteur sur un écran de visualisation pouvant être l'écran de visualisation d'un système de navigation. Il est souhaitable que cette retransmission des images obtenues soit la plus fidèle possible et notamment que le conducteur puisse correctement apprécier distance, vitesse et direction de déplacement du véhicule étranger 2.

Pour cela, figure 2, une étape de capture 1g, 1d d'images est réalisée par les moyens de vision gauche 10a et droit 10b fournissant des signaux représentatif des images capturées. Les images capturées peuvent être améliorées notamment par des corrections de distorsion, des améliorations du contraste. L'amélioration des images peut être réalisées par des moyens de calculs intégrés au bloc de la caméra, ou bien par un autre moyen de calcul distinct, par exemple une Unité Electronique de Commande (ECU). L'étape de capture 1g, 1d peut être différenciée pour les moyens de vision gauche 10a et droit 10b.

Les signaux représentatifs des images capturées sont traités par un système électronique d'affichage et sont notamment soumis à une étape d'adaptation d'images 2g, 2d qui peut être différente pour les images venant de la gauche ou de la droite et qui vise à améliorer la compréhension qu'un utilisateur peut avoir des images. Les images obtenues après rectification sont ensuite combinées au cours d'une étape de combinaison 3.

Ces opérations d'adaptation d'images et de combinaison peuvent être réalisées par des moyens de calcul, par exemple l'Unité Electronique de Commande (ECU).

Enfin, le résultat de ces opérations est affiché sur l'écran de visualisation au cours d'une étape de visualisation 4 permettant de transformer les signaux de sortie du système électronique d'affichage pour les retransmettre à un utilisateur.

L'étape de capture 1g, 1d des images s'effectue à une période d'échantillonnage, ou de capture, variable pour s'assurer que le conducteur puisse percevoir des obstacles mobiles de vitesses différentes et en particulier rapides. De préférence, on choisira une période d'échantillonnage qui permettra de réaliser une séquence vidéo en temps réel de qualité satisfaisante pour le conducteur. On pourra prévoir des mémoires tampons afin d'améliorer la fiabilité du dispositif et par exemple limiter les sauts d'image.

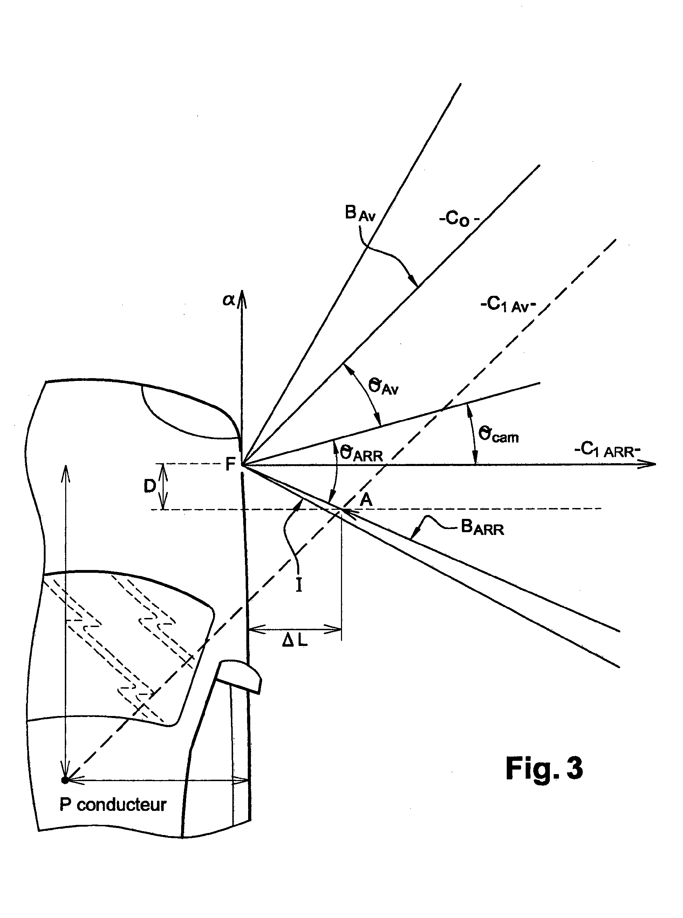

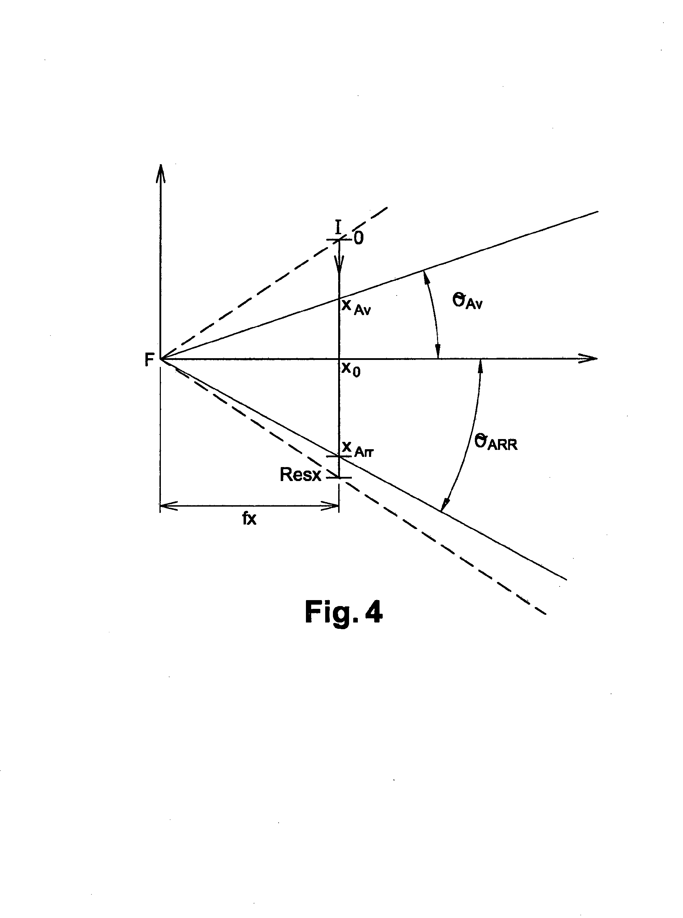

L'étape d'adaptation d'images 2d, 2g sera décrite en relation avec les figures 3 et 4 représentant la construction géométrique de la détermination du champ d'intérêt en vue de dessus, le champ d'intérêt étant alors projeté sur un plan horizontal.

Cette étape consiste à appliquer aux images deux transformations, de préférence combinées en une seule opération, dans le but de les rendre le plus compréhensible possible à l'utilisateur.

Cette étape d'adaptation d'images 2g, 2d comprend une première étape de sélection de la zone d'intérêt par tronquage, pour ne conserver que les zones que le conducteur ne peut pas voir et qui lui sont intéressantes, et ainsi faire apparaître plus grande dans l'image finale la zone intéressante. Cette étape produit également une optimisation du stockage éventuel de ces images et un allègement de la charge de leur traitement par les moyens de calcul.

Cette première étape d'adaptation d'images 2d, 2g sera décrite pour l'un des moyens de vision latéraux 10a, 10b, par exemple le moyen de vision latéral droit 10b dont le foyer F sera pris comme référence et comme origine du repère orthonormé $(\alpha, F, \beta)$, les droites $\alpha$ et $\beta$ étant respectivement parallèles aux axes X-X longitudinaux et transversaux Y-Y du véhicule (1).

Des traitements analogues sont réalisés pour le côté gauche du véhicule (1). Dans la suite de la description, la partie gauche n'a pas été différenciée de la partie droite. Il sera compris qu'afin d'obtenir les éléments correspondant à la partie droite, un indice d (pour droite) sera ajouté et un indice g (pour gauche) pour la partie gauche. Un élément X sera dénommé Xd s'il se situe du côté droit et Xg s'il se situe du côté gauche du véhicule 1.

Au cours de cette étape, on sélectionne dans le champ de vision C0 du moyen de vision latéral droit 10b, la zone d'intérêt ou champ d'intérêt C1 en délimitant un bord de champ avant Bav et un bord de champ arrière Barr.

On définit une distance de dépassement d'obstacle D correspondant à la distance de dépassement vers l'avant du moyen de vision latéral droit 10b suivant l'axe $\alpha$ par rapport à l'arête la plus occultante de l'obstacle occultant, que l'on désignera dans la suite de la description arête occultante A de coordonnées $(\alpha_a, \beta_a)$.

On définit une distance d'éloignement du véhicule 1 de l'obstacle $\Delta L$ comme la distance suivant l'axe $\beta$ séparant le moyen de vision latéral droit 10b de l'arête occultante A.

Ces deux distances sont fixées et prises comme paramètres.

On prend également comme paramètre, la position du conducteur assis au poste de conduite assimilée à un point Pconducteur de coordonnées $(\alpha_{conducteur}, \beta_{conducteur})$ dans le véhicule.

La droite délimitant le bord de champ avant Bav est la droite passant par le foyer F du moyen de vision latéral droit 10b et parallèle à la droite reliant la position du conducteur Pconducteur et l'arête occultante A.

Pour faciliter la compréhension par l'utilisateur de l'image qui sera affichée, il faut qu'il y aperçoive l'arête occultante A. Ainsi, le bord de champ arrière Barr est délimité par une droite passant par le foyer F du moyen de vision latéral droit 10b et par l'arête occultante A.

Le champ d'intérêt C1 peut être découpé en un champ d'intérêt avant C1av et un champ d'intérêt arrière C1arr.

Lorsque l'axe optique du moyen de vision latéral droit 10b est orienté d'un angle θcam par rapport à l'axe β, le champ d'intérêt avant C1av s'étend à partir de l'axe optique vers le bord avant Bav suivant un angle θav conforme à la relation suivante :

$$\theta_{av} = A\tan(\alpha'_{conducteur} - \beta_{conducteur}) - \theta_{cam}$$

Le champ d'intérêt arrière Clarr s'étend à partir de l'axe optique vers le bord arrière Barr suivant un angle θarr conforme à la relation suivante :

$$\theta_{arr} = A\tan(D - \Delta L) + \theta_{cam}$$

Le plan image I situé à une distance focale fx et perpendiculaire à l'axe optique de la caméra dont l'intersection s'effectue en un point X0, coupe le bord avant Bav en un point Xav et le bord arrière Barr en un point Xarr.

Ces coordonnées peuvent alors être exprimées suivant les relations suivantes :

$$X_{av} = X_0 - f_x * \sin(\theta_{av})$$

$$X_{arr} = X_0 - f_x * \sin(\theta_{arr})$$

Des relations analogues permettent d'obtenir Yhaut et Ybas qui sont les coordonnées des bords supérieur et inférieur du champ d'intérêt C1 selon un plan vertical.

Suivant cette première étape de sélection de la zone d'intérêt par tronquage, l'étape d'adaptation d'images comporte une deuxième étape de transformation en perspective. Au cours de cette deuxième étape, les images tronquées sont transformées pour créer un effet de perspective.

Pour l'image droite, on effectue la transformation suivante :

$$\begin{bmatrix} (Resx + d)/2 & Resx & Resx & (Resx + d)/2 \\ (Resy - H)/2 & 0 & Resy & (Resy + H)/2 \\ 1 & 1 & 1 & 1 \end{bmatrix} = H_D \times \begin{bmatrix} X_{av} & X_{arr} & X_{av} & X_{arr} \\ Y_{haut} & Y_{haut} & Y_{bas} & Y_{bas} \\ 1 & 1 & 1 & 1 \end{bmatrix}$$

Pour l'image gauche, on effectue la transformation suivante :

$$\begin{bmatrix} 0 & (Resx - d)/2 & (Resx - d)/2 & 0 \\ 0 & (Resy - H)/2 & (Resy + H)/2 & Res_y \\ 1 & 1 & 1 & 1 \end{bmatrix} = H_G * \begin{bmatrix} X_{av} & X_{arr} & X_{av} & X_{arr} \\ Y_{haut} & Y_{haut} & Y_{bas} & Y_{bas} \\ 1 & 1 & 1 & 1 \end{bmatrix}$$

Avec :

- Resx et Resy la résolution de l'image finale en pixels
- H la hauteur en pixels de l'extrémité avant des zones d'intérêt après homographie
- d la distance séparant dans l'image finale les images gauches et droites.

L'homographie H$_x$ qui transforme les points x$_i$ en x'$_i$ peut être déterminée de la manière suivante:

$$x'_i = H_x*x_i \Leftrightarrow x'_i \wedge H_x*x_i = 0$$

$$\text{Si } H_x = \begin{pmatrix} h_{x11} & h_{x12} & h_{x13} \\ h_{x21} & h_{x22} & h_{x23} \\ h_{x31} & h_{x32} & h_{x33} \end{pmatrix} = \begin{pmatrix} h_{x1}^T \\ h_{x2}^T \\ h_{x3}^T \end{pmatrix}$$

$$\begin{pmatrix} x'_i \\ y'_i \\ w'_i \end{pmatrix} \wedge \begin{pmatrix} h_{x1}^T.x_i \\ h_{x2}^T.x_i \\ h_{x3}^T.x_i \end{pmatrix} = \begin{pmatrix} y'_i.h_{x3}^T.x_i - w'_i.h_{x2}^T.x_i \\ w'_i.h_{x1}^T.x_i - x'_i.h_{x3}^T.x_i \\ x'_i.h_{x2}^T.x_i - y'_i.h_{x1}^T.x_i \end{pmatrix} = \begin{pmatrix} 0 \\ 0 \\ 0 \end{pmatrix}$$

$$\Leftrightarrow \begin{pmatrix} 0 & 0 & 0 & -w'_i.x_i^T & y'_i.x_i^T \\ w'_i.x_i^T & 0 & 0 & 0 & -x'_i.x_i^T \\ -y'_i.x_i^T & x'_i.x_i^T & 0 & 0 & 0 \end{pmatrix} \times \begin{pmatrix} h_{x1}^T \\ h_{x2}^T \\ h_{x3}^T \end{pmatrix} = \begin{pmatrix} 0 \\ 0 \\ 0 \end{pmatrix}$$

On a donc le système d'équations linéaires :

$$\begin{matrix}(1)\\(2)\\(3)\end{matrix}\begin{pmatrix} 0 & 0 & 0 & -w'_i.x_i^T & y'_i.x_i^T \\ w'_i.x_i^T & 0 & 0 & 0 & -x'_i.x_i^T \\ -y'_i.x_i^T & x'_i.x_i^T & 0 & 0 & 0 \end{pmatrix} \times \begin{pmatrix} h_{x11} \\ h_{x12} \\ h_{x13} \\ h_{x21} \\ h_{x22} \\ h_{x23} \\ h_{x31} \\ h_{x32} \\ h_{x33} \end{pmatrix} = \begin{pmatrix} 0 \\ 0 \\ 0 \end{pmatrix}$$

Dans ce système d'équations, on voit que

$$(3) = -x'/w' (1) - y'/w' (2)$$

On peut donc réduire le système à :

$$\begin{pmatrix} 0 & 0 & 0 & -w'_i.x_i^T & y'_i.x_i^T \\ w'_i.x_i^T & 0 & 0 & 0 & -x'_i.x_i^T \end{pmatrix} \times \begin{pmatrix} h_{x11} \\ h_{x12} \\ h_{x13} \\ h_{x21} \\ h_{x22} \\ h_{x23} \\ h_{x31} \\ h_{x32} \\ h_{x33} \end{pmatrix} = \begin{pmatrix} 0 \\ 0 \end{pmatrix}$$

Soit pour les 4 points de correspondances :

$$\begin{pmatrix} 0 & 0 & 0 & -w'_1 x_1 & -w'_1 y_1 & -w'_1 w_1 & y'_1 x_1 & y'_1 y_1 & y'_1 w_1 \\ w'_1 x_1 & w'_1 y_1 & w'_1 w_1 & 0 & 0 & 0 & -x'_1 x_1 & -x'_1 y_1 & -x'_1 y_1 \\ 0 & 0 & 0 & -w'_2 x_2 & -w'_2 y_2 & -w'_2 w_2 & y'_2 x_2 & y'_2 y_2 & y'_2 w_2 \\ w'_2 x_2 & w'_2 y_2 & w'_2 w_2 & 0 & 0 & 0 & -x'_2 x_2 & -x'_2 y_2 & -x'_2 y_2 \\ 0 & 0 & 0 & -w'_3 x_3 & -w'_3 y_3 & -w'_3 w_3 & y'_3 x_3 & y'_3 y_3 & y'_3 w_3 \\ w'_3 x_3 & w'_3 y_3 & w'_3 w_3 & 0 & 0 & 0 & -x'_3 x_3 & -x'_3 y_3 & -x'_3 y_3 \\ 0 & 0 & 0 & -w'_4 x_4 & -w'_4 y_4 & -w'_4 w_4 & y'_4 x_4 & y'_4 y_4 & y'_4 w_4 \\ w'_4 x_4 & w'_4 y_4 & w'_4 w_4 & 0 & 0 & 0 & -x'_4 x_4 & -x'_4 y_4 & -x'_4 y_4 \end{pmatrix}$$

$$\times \begin{pmatrix} h_{x11} \\ h_{x12} \\ h_{x13} \\ h_{x21} \\ h_{x22} \\ h_{x23} \\ h_{x31} \\ h_{x32} \\ h_{x33} \end{pmatrix} = \begin{pmatrix} 0 \\ 0 \end{pmatrix}$$

On peut ensuite fixer $h_{33}$ à 1 : cela correspond au facteur d'échelle de l'homographie. Le système à résoudre est donc :

$$\begin{pmatrix} 0 & 0 & 0 & -w'_1 x_1 & -w'_1 y_1 & -w'_1 w_1 & y'_1 x_1 & y'_1 y_1 & y'_1 w_1 \\ w'_1 x_1 & w'_1 y_1 & w'_1 w_1 & 0 & 0 & 0 & -x'_1 x_1 & -x'_1 y_1 & -x'_1 y_1 \\ 0 & 0 & 0 & -w'_2 x_2 & -w'_2 y_2 & -w'_2 w_2 & y'_2 x_2 & y'_2 y_2 & y'_2 w_2 \\ w'_2 x_2 & w'_2 y_2 & w'_2 w_2 & 0 & 0 & 0 & -x'_2 x_2 & -x'_2 y_2 & -x'_2 y_2 \\ 0 & 0 & 0 & -w'_3 x_3 & -w'_3 y_3 & -w'_3 w_3 & y'_3 x_3 & y'_3 y_3 & y'_3 w_3 \\ w'_3 x_3 & w'_3 y_3 & w'_3 w_3 & 0 & 0 & 0 & -x'_3 x_3 & -x'_3 y_3 & -x'_3 y_3 \\ 0 & 0 & 0 & -w'_4 x_4 & -w'_4 y_4 & -w'_4 w_4 & y'_4 x_4 & y'_4 y_4 & y'_4 w_4 \\ w'_4 x_4 & w'_4 y_4 & w'_4 w_4 & 0 & 0 & 0 & -x'_4 x_4 & -x'_4 y_4 & -x'_4 y_4 \end{pmatrix}$$

$$\times \begin{pmatrix} h_{x11} \\ h_{x12} \\ h_{x13} \\ h_{x21} \\ h_{x22} \\ h_{x23} \\ h_{x31} \\ h_{x32} \end{pmatrix} = \begin{pmatrix} 0 \\ 0 \end{pmatrix}$$

Ce qui permet de retrouver les coefficients $h_{xij}$ de la matrice $H_x$ (et $h_{33} = 1$).

Cette opération de transformation pourra être effectuée une seule fois au moment de la mise au point du dispositif, puis intégrée dans une mémoire accessible par le système électronique d'affichage, et notamment par le calculateur sous forme d'une table.

Cette table pourra alors être utilisée dans l'étape de construction de l'image finale pour décharger le calculateur.

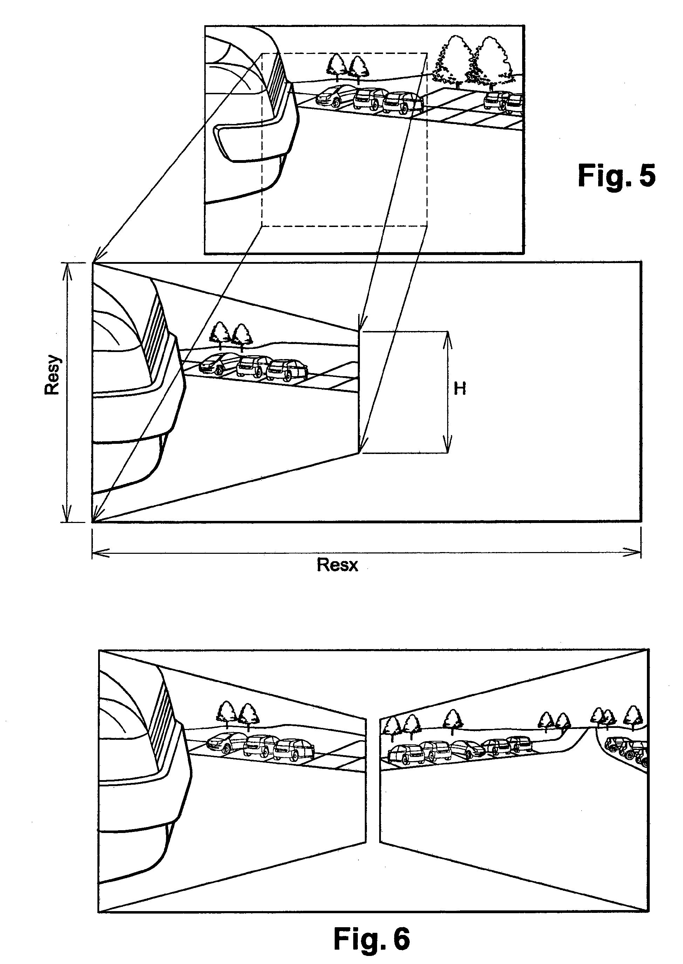

L'étape de construction de l'image finale sera décrite en relation avec les figures 5 et 6, dans le cas ou l'opération de transformation de l'étape d'adaptation d'images sera intégrée sous forme de table dans une table accessible par le calculateur.

Au cours de cette étape, chaque pixel de l'image finale qui sera affichée sur l'écran de visualisation sera associé soit à un pixel de l'image droite, soit à un pixel de l'image gauche, soit à aucun pixel dans le cas d'un pixel du fond de l'image finale. Le calculateur recopie dans le pixel de l'image finale, la couleur du pixel associé. La figure 5 montre la construction de l'image finale pour le côté gauche.

Comme représenté à la figure 6, les images finales des deux caméras sont affichées simultanément l'une à côté de l'autre sur l'écran de visualisation, par exemple l'écran de navigation situé sur le tableau de bord.

De cette manière, l'utilisateur peut avoir une vue d'ensemble des obstacles arrivant à gauche et à droite.

Bien que l'invention a été décrite par rapport à l'acquisition et l'affichage d'images latérales provenant des deux côtés du véhicule 1, il est entendu que la protection est également recherchée pour le cas où les images ne provenant que d'un seul côté sont capturées, traitées et affichées.

De même, bien que l'on ait décrit le dispositif en relation avec un déplacement avant du véhicule 1, il est entendu que l'invention d'adresse également à des manoeuvres en marche arrière pour sortir d'un garage par exemple. Le dispositif comprendrait alors des moyens de vision latéraux situés dans une partie arrière du véhicule 1 et notamment dans les blocs optiques arrières.

**Revendications**

1. Dispositif d'aide à la sortie de voie occultée pour un véhicule (1) comprenant :

   - des moyens de vision latéraux (10a, 10b) prenant place sur une partie située en avant d'un poste de conduite du véhicule (1) et aptes à capturer des images latérales d'au moins un côté du véhicule,
   - un système électronique d'affichage apte à recevoir des signaux représentatif des images capturées et comporte des moyens d'adaptation d'images étant aptes à sélectionner un champ d'intérêt (C1g, C1d) par tronquage d'un champ total (C0g, C0d) des images latérales,
- lesdits moyens d'adaptation comportent des moyens de transformation en perspective des images latérales tronquées,
- un écran de visualisation apte à transformer les signaux de sortie du système électronique d'affichage pour les retransmettre à un utilisateur sous forme d'images,

**caractérisé en ce que**
les moyens de transformation en perspective de ces images gauche et droite obtenues après tronquage réalisent pour l'image droite la transformation suivante :

$$\begin{bmatrix} (\text{Resx}+\text{d})/2 & \text{Resx} & \text{Resx} & (\text{Resx}+\text{d})/2 \\ (\text{Resy}-\text{H})/2 & 0 & \text{Resy} & (\text{Resy}+\text{H})/2 \\ 1 & 1 & 1 & 1 \end{bmatrix} = H_D \times \begin{bmatrix} X_{av} & X_{arr} & X_{av} & X_{arr} \\ Y_{haut} & Y_{haut} & Y_{bas} & Y_{bas} \\ 1 & 1 & 1 & 1 \end{bmatrix}$$

et pour l'image gauche, la transformation suivante :

$$\begin{bmatrix} 0 & (\text{Re}sx-d)/2 & (\text{Re}sx-d)/2 & 0 \\ 0 & (\text{Re}sy-H)/2 & (\text{Re}sy+H)/2 & \text{Re}s_y \\ 1 & 1 & 1 & 1 \end{bmatrix} = H_G \times \begin{bmatrix} X_{av} & X_{arr} & X_{av} & X_{arr} \\ Y_{haut} & Y_{haut} & Y_{bas} & Y_{bas} \\ 1 & 1 & 1 & 1 \end{bmatrix}$$

avec :

- Resx et Resy la résolution de l'image finale en pixels,
- H la hauteur en pixels de l'extrémité avant des zones d'intérêt après homographie,
- d la distance séparant dans l'image finale les images gauches et droites

les homographies $H_D$ et $H_G$ étant des matrices de transformations prédéterminées pour l'image droite et pour l'image gauche.

2. Dispositif d'aide à la sortie de voie occultée selon la revendication précédente **caractérisé en ce que** les moyens de transformation en perspective utilisent une table de correspondance prédéterminée par mise au point et intégrée dans un mémoire pour transformer les images tronquées.

3. Dispositif d'aide à la sortie de voie occultée selon l'une des revendications précédentes **caractérisé en ce que** les moyens de vision latéraux (10a, 10b) sont aptes à capturer des images latérales avant gauche et avant droite du véhicule.

4. Dispositif d'aide à la sortie de voie occultée selon l'une des revendications précédentes **caractérisé en ce que** les moyens d'adaptation d'images sont aptes à traiter des images latérales avant gauche et avant droite en vue d'un affichage simultané des images latérales.

5. Dispositif d'aide à la sortie de voie occultée selon la revendication 6 ou 7 **caractérisé en ce que** le système électronique d'affichage comporte des moyens de combinaison desdites images avant gauche et droite adaptées de sorte que ces images adaptées soient affichées en combinaison dans l'écran de visualisation.

6. Dispositif d'aide à la sortie de voie occultée selon l'une des revendications précédentes **caractérisé en ce que** la projection des champs d'intérêts (C1g, C1d) dans un repère orthonormé ($\alpha$, F, $\beta$) d'un plan horizontal sont délimités dans un plan image I situé à une distance focale fx du foyer F des moyens de vision latéraux (10a, 10b) et coupant l'axe optique des moyens de vision latéraux (10a, 10b), orienté d'un angle θcam par rapport à l'axe $\beta$, en un point X0 par un bord avant Xav tel que :

$$X_{av} = X_0 - f_x * \sin(\theta_{av})$$

avec $\theta_{av}$ tel que

$$\theta_{av} = A\tan(\alpha_{conducteur} - \beta_{conducteur}) - \theta_{cam}$$

où $\alpha_{conducteur}$ et $\beta_{conducteur}$ sont les coordonnées du point Pconducteur auquel un conducteur peut prendre place et par un bord arrière Xarr tel que :

$$X_{arr} = X_0 - f_x * \sin(\theta_{arr})$$

avec $\theta_{arr}$ tel que

$$\theta_{arr} = A\tan(D - \Delta L) + \theta_{cam}$$

où D et $\Delta$L sont les distances séparant les moyens de vision latéraux (10a, 10b) par rapport à une arête occultante A respectivement suivant les axes $\alpha$ et $\beta$.

7. Dispositif d'aide à la sortie de voie occultée selon l'une des revendications précédentes **caractérisé en ce que** les images latérales sont capturées à une fréquence variable en fonction de la vitesse des obstacles mobiles à détecter.

8. Dispositif d'aide à la sortie de voie occultée selon l'une des revendications précédentes **caractérisé en ce que** les moyens d'adaptation d'images réalisent des opérations d'adaptation d'images différentes pour les images avant gauche et avant droite.

9. Dispositif d'aide à la sortie de voie occultée selon l'une des revendications précédentes **caractérisé en ce que** les moyens de vision latéraux (10a, 10b) sont disposés dans des boîtiers d'éclairage ou de signalisation du véhicule (1), de préférence derrière une paroi transparente de protection des boîtiers d'éclairage ou à proximité immédiate des répéteurs de clignotants situés sur les ailes avant du véhicule (1).

10. Dispositif d'aide à la sortie de voie occultée selon l'une des revendications précédentes **caractérisé en ce que** l'écran de visualisation est celui d'un système de navigation.

11. Dispositif d'aide à la sortie de voie occultée selon l'une des revendications précédentes **caractérisé en ce que** les moyens de vision latéraux (10a, 10b) comportent des moyens de correction des images capturées aptes à corriger la distorsion et/ou des niveaux de contrastes.

**Patentansprüche**

1. Unterstützungsvorrichtung zur Ausfahrt aus einer verborgenen Straße für ein Fahrzeug (1), die Folgendes aufweist:

- seitliche Sichtmittel (10a, 10b), die auf einem Teil, der sich vor einem Fahrerposten des Fahrzeugs (1) befindet, liegen und geeignet sind, um seitliche Bilder mindestens einer Fahrzeugseite zu erfassen,
- ein elektronisches Anzeigesystem, das geeignet ist, um Signale zu erfassen, für die erfassten Bilder repräsentativ ist und die Mittel zum Anpassen von Bildern aufweist, die geeignet sind, um einen Interessensbereich (C1g, C1d) durch Abschneiden eines Gesamtfelds (C0g, C0d) der seitlichen Bilder auszuwählen,
- wobei die Anpassungsmittel Mittel zum Umformen in Perspektive der abgeschnittenen seitlichen Bilder aufweisen,
- einen Anzeigebildschirm, der geeignet ist, um die Ausgangssignale des elektronischen Anzeigesystems umzuwandeln, um sie an einen Benutzer in Form von Bildern weiterzugeben, **dadurch gekennzeichnet, dass** die Mittel zum Umformen in Perspektive dieser linken und rechten Bilder, die nach Abschneiden erzielt werden, für das rechte Bild die folgende Umformung ausführen:

$$\begin{bmatrix} Re\,sx+d\,)/2 & Re\,sx & Re\,sx & (Re\,sx+d\,)/2 \\ (Re\,sy-H\,)/2\,0 & & Re\,sy & (Re\,sy+H\,)/2 \\ 1 & 1 & 1 & 1 \end{bmatrix} = H_D \times \begin{bmatrix} X_{vorn} & X_{hinten} & X_{vorn} & X_{hinten} \\ Y_{oben} & Y_{oben} & Y_{unten} & Y_{unten} \\ 1 & 1 & 1 & 1 \end{bmatrix}$$

und für das linke Bild die folgende Umformung:

$$\begin{bmatrix} 0 & Re\,sx-d\,)/2 & (Re\,sx-d\,)/2\,0 & \\ 0 & (Re\,sy-H\,)/2 & (Re\,sy+H\,)/2 & Re\,s_y \\ 1 & 1 & 1 & 1 \end{bmatrix} = H_G \times \begin{bmatrix} X_{vorn} & X_{hinten} & X_{vorn} & X_{hinten} \\ Y_{oben} & Y_{oben} & Y_{unten} & Y_{unten} \\ 1 & 1 & 1 & 1 \end{bmatrix}$$

wobei:
- Resx und Resy die Auflösung des abschließenden Bilds in Pixel sind,
- H die Höhe in Pixel des vorderen Endes der Interessensbereiche nach der Kollineation ist,
- d die Entfernung ist, die in dem abschließenden Bild die linken und die rechten Bilder trennt,

wobei die Kollineationen $H_D$ und $H_G$ vorbestimmte Umformungsmatrizen für das rechte Bild und für das linke Bild sind.

2. Unterstützungsvorrichtung zur Ausfahrt aus einer verborgenen Straße nach dem vorhergehenden Anspruch, **dadurch gekennzeichnet, dass** die Mittel zur Umformung in Perspektive eine Entsprechungstabelle verwenden, die durch Optimierung vorbestimmt und in einem Speicher zum Umformen der abgeschnittenen Bilder integriert ist.

3. Unterstützungsvorrichtung zur Ausfahrt aus einer verborgenen Straße nach einem der vorhergehenden Ansprüche, **dadurch gekennzeichnet, dass** die seitlichen Sichtmittel (10a, 10b) geeignet sind, um seitliche vordere linke und vordere rechte Bilder des Fahrzeugs zu erfassen.

4. Unterstützungsvorrichtung zur Ausfahrt aus einer verborgenen Straße nach einem der vorhergehenden Ansprüche, **dadurch gekennzeichnet, dass** die Bildanpassungsmittel geeignet sind, um seitliche vordere linke und vordere rechte Bilder zur gleichzeitigen Anzeige der seitlichen Bilder zu verarbeiten.

5. Unterstützungsvorrichtung zur Ausfahrt aus einer verborgenen Straße nach Anspruch 6 oder Anspruch 7, **dadurch gekennzeichnet, dass** das elektronische Anzeigesystem Mittel zum Kombinieren der vorderen linken und rechten Bilder aufweist, die derart angepasst sind, dass diese angepassten Bilder kombiniert auf dem Anzeigebildschirm angezeigt werden.

6. Unterstützungsvorrichtung zur Ausfahrt aus einer verborgenen Straße nach einem der vorhergehenden Ansprüche, **dadurch gekennzeichnet, dass** die Projektion der Interessensbereiche (C1g, C1d) in einer orthonormierten Markierung ($\alpha$, F, $\beta$) einer horizontalen Ebene in einer Bildebene I abgegrenzt sind, die in einer Brennweite fx von dem Brennpunkt F der seitlichen Sichtmittel (10a, 10b) liegt und die optische Achse der seitlichen Sichtmittel (10a, 10b), die mit einem Winkel $\theta$cam in Bezug zu der Achse $\beta$ ausgerichtet ist, in einem Punkt X0 durch einen vorderen Rand $X_{vorn}$ schneidet, so dass:

$$X_{vorn} = X_0 - f_x * \sin(\theta_{vorn})$$

wobei $\theta_{vorn}$ derart ist, dass

$$\theta_{vorn} = A\tan(\alpha_{Fahrer} - \beta_{Fahrer}) - \theta_{cam} \, ,$$

wobei $\alpha_{Fahrer}$ und $\beta_{Fahrer}$ die Koordinaten des Punkts PFahrer sind, an welchem sich ein Fahrer setzen kann, und durch einen hinteren Rand $X_{hinten}$ schneiden, so dass:

$$X_{hinten} = X_0 - f_x * sin(\theta_{hinten})$$

wobei $\theta_{hinten}$ derart ist, dass

$$\theta_{hinten} = A\tan(D - \Delta L) + \theta_{cam} \, ,$$

wobei D und $\Delta$L die Entfernungen sind, die die seitlichen Sichtmittel (10a, 10b) in Bezug zu einer verbergenden Kante A jeweils entlang der Achsen $\alpha$ und $\beta$ trennen.

7. Unterstützungsvorrichtung zur Ausfahrt aus einer verborgenen Straße nach einem der vorhergehenden Ansprüche, **dadurch gekennzeichnet, dass** die seitlichen Bilder mit einer Frequenz erfasst werden, die in Abhängigkeit von der Geschwindigkeit der zu erfassenden beweglichen Hindernisse variabel ist.

8. Unterstützungsvorrichtung zur Ausfahrt aus einer verborgenen Straße nach einem der vorhergehenden Ansprüche, **dadurch gekennzeichnet, dass** die Bildanpassungsmittel unterschiedliche Bildanpassungsvorgänge für die vorderen linken und die vorderen rechten Bilder ausführen.

9. Unterstützungsvorrichtung zur Ausfahrt aus einer verborgenen Straße nach einem der vorhergehenden Ansprüche, **dadurch gekennzeichnet, dass** die seitlichen Sichtmittel (10a, 10b) in Beleuchtungsgehäusen oder Signalisierungsgehäusen des Fahrzeugs (1), vorzugsweise hinter einer durchsichtigen Schutzwand der Beleuchtungsgehäuse oder in unmittelbarer Nähe der Zusatzblinkleuchten, die auf den vorderen Flügeln des Fahrzeugs (1) liegen, angeordnet sind.

10. Unterstützungsvorrichtung zur Ausfahrt aus einer verborgenen Straße nach einem der vorhergehenden Ansprüche, **dadurch gekennzeichnet, dass** der Anzeigebildschirm der eines Navigationssystems ist.

11. Unterstützungsvorrichtung zur Ausfahrt aus einer verborgenen Straße nach einem der vorhergehenden Ansprüche, **dadurch gekennzeichnet, dass** die seitlichen Sichtmittel (10a, 10b) Mittel zur Korrektur der erfassten Bilder aufweisen, die geeignet sind, um Verzerrungen und/oder Kontrastniveaus zu korrigieren.

**Claims**

1. Assistance device for exiting a hidden lane for a vehicle (1) comprising;

   - lateral vision means (10a, 10b) situated on a part located forward of a driving cab of the vehicle (1) and capable of picking up lateral images on at least one side of the vehicle,
   - an electronic display system capable of receiving signals representative of the images picked up and comprising image adaptation means that are capable of selecting a field of interest (C1g, C1d) by truncating a total field (C0g, C0d) of the lateral images,
   - said adaptation means comprise means for transforming the perspective of the truncated lateral images,
   - a display screen capable of transforming the output signals of the electronic display system to transmit them to a user in image form,

   **characterized in that**

the means for transforming the perspective of these left and right images obtained after truncation produce, for the right image, the following transformation:

$$\begin{bmatrix} (Resx+d)/2 & Resx & Resx & (Resx+d)/2 \\ (Resy-H)/2 & 0 & Resy & (Resy+H)/2 \\ 1 & 1 & 1 & 1 \end{bmatrix} = H_D \times \begin{bmatrix} X_{av} & X_{arr} & X_{av} & X_{arr} \\ Y_{haut} & Y_{haut} & Y_{bas} & Y_{bas} \\ 1 & 1 & 1 & 1 \end{bmatrix}$$

for the left image, the following transformation:

$$\begin{bmatrix} 0 & (Resx-d)/2 & (Resx-d)/2 & 0 \\ 0 & (Resy-H)/2 & (Resy+H)/2 & Res_y \\ 1 & 1 & 1 & 1 \end{bmatrix} = H_G \times \begin{bmatrix} X_{av} & X_{arr} & X_{av} & X_{arr} \\ Y_{haut} & Y_{haut} & Y_{bas} & Y_{bas} \\ 1 & 1 & 1 & 1 \end{bmatrix}$$

with:

- Resx and Resy being the resolution of the final image in pixels,
- H being the height in pixels of the front end of the areas of interest after homography
- d being the distance separating, in the final image, the left and right images

the homographies $H_D$ and $H_G$ being matrices of predetermined transformations for the right image and for the left image.

2. Assistance device for exiting a hidden lane according to the preceding claim, **characterized in that** the perspective transformation means use a mapping table predetermined by adjustment and incorporated in a memory to transform the truncated images.

3. Assistance device for exiting a hidden lane according to one of the preceding claims, **characterized in that** the lateral vision means (10a, 10b) are capable of picking up lateral images front left and front right of the vehicle.

4. Assistance device for exiting a hidden lane according to one of the preceding claims, **characterized in that** the image adaptation means are capable of processing front left and front right lateral images for a simultaneous display of the lateral images.

5. Assistance device for exiting a hidden lane according to Claim 6 or 7, **characterized in that** the electronic display system comprising means for combining said adapted front left and right images so that these adapted images are displayed in combination in the display screen.

6. Assistance device for exiting a hidden lane according to one of the preceding claims, **characterized in that** the projection of the fields of interest (C1g, C1d) in an orthonormal reference frame ($\alpha$, F, $\beta$) of a horizontal plane are delimited in an image plane I situated at a focal distance fx from the focus F of the lateral vision means (10a, 10b) and intersecting the optical axis of the lateral vision means (10a, 10b), oriented by an angle $\theta$cam relative to the axis $\beta$, at a point x0 via a front edge Xav such that:

$$X_{av} = X_0 - f_x * \sin(\theta_{av})$$

with $\theta$av such that

$$\theta_{av} = A\tan(\alpha_{driver} - \beta_{driver}) - \theta_{cam}$$

wherein $\alpha_{driver}$ and $\beta_{driver}$ are the coordinates of the point Pdriver at which a driver can sit and by a rear edge Xarr such that:

$$X_{arr} = X_0 - f_x * \sin(\theta_{arr})$$

with θarr such that

$$\theta_{arr} = A\tan(D - \Delta L) + \theta_{cam}$$

where D and ΔL are the distances separating the lateral vision means (10a, 10b) relative to a hiding edge A respectively along the axes α and β.

7.  Assistance device for exiting a hidden lane according to one of the preceding claims, **characterized in that** the lateral images are picked up at a frequency that is variable as a function of the speed of the mobile obstacles to be detected.

8.  Assistance device for existing a hidden lane according to one of the preceding claims, **characterized in that** the image adaptation means carry out different image adaptation operations for the front left and front right images.

9.  Assistance device for exiting a hidden lane according to one of the preceding claims, **characterized in that** the lateral vision means (10a, 10b) are arranged in lighting or signalling modules of the vehicle (1), preferably behind a transparent wall protecting the lighting modules or in the immediate proximity of the repeaters of indicator lamps situated on the front wings of the vehicle (1).

10. Assistance device for exiting a hidden lane according to one of the preceding claims, **characterized in that** the display screen is that of a navigation system.

11. Assistance device for exiting a hidden lane according to one of the preceding claims, **characterized in that** the lateral vision means (10a, 10b) comprise means for correcting the images picked up capable of correcting the distortion and/or contrast levels.

-4a-  2  -3-  -4b-

x-x

-10a- -10b-

y-y

1

**Fig. 1**

-1g-  -1d-

-2g-  -2d-

-3-

**Fig. 2**

-4-

**Fig. 3**

Fig. 4

**Fig. 5**

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2007015662 B
- JP 10301167 B
- EP 1777107 A